# EUROPÄISCHE PATENTSCHRIFT

(11) **EP 1 148 266 B1**
(45) Veröffentlichungstag und Bekanntmachung des Hinweises auf die Patenterteilung: **22.10.2003**
(21) Anmeldenummer: 01107773.2
(22) Anmeldetag: 04.04.2001
(51) Int. Cl.: F16D 66/00

(54) **Überwachungseinrichtung für Bremsscheiben und Verfahren zur Überwachung der Temperatur von Bremsscheiben**
Apparatus and process to monitor the temperature of brake discs
Appareil et procédé de surveillance de la température des disques de freins à disques

(30) Priorität: 14.04.2000 DE 10018513
(43) Veröffentlichungstag der Anmeldung: 24.10.2001
(73) Patentinhaber: KNORR-BREMSE Systeme für Schienenfahrzeuge GmbH, 80809 München (DE)
(72) Erfinder: Schmid, Ralf, 85591 Vaterstetten (DE); Wirth, Xaver, Dr., 85373 Ismaning (DE); Schlenk, Ludwig, Dr., 85247 Schwabhausen (DE)

(56) Entgegenhaltungen:
- EP-A- 1 081 845
- DE-A- 3 148 552
- DE-A- 3 502 052
- DE-A- 4 006 885
- US-A- 5 483 827
- US-A- 5 936 155

## Beschreibung

Die Erfindung betrifft eine Überwachungseinrichtung für Bremsscheiben von Fahrzeugen, insbesondere von Schienenfahrzeugen, mit wenigstens einem zur Temperaturüberwachung dienenden Sensor, der in der Bremsscheibe oder in der Nähe der Bremsscheibe angeordnet ist und dessen Sensorsignale in bezug zur Temperatur der Bremsscheibe stehen, mit wenigstens einem die Sensorsignale sendenden Sender und mit wenigstens einem die gesendeten Signale empfangenden Empfänger, wobei das übertragen der Sensorsignale vom Sender zum Empfänger drahtlos ist. Ferner betrifft die Erfindung ein Verfahren zur Überwachung der Temperatur von Bremsscheiben von Fahrzeugen, insbesondere von Schienenfahrzeugen.

In DE-A-31 48 552 ist eine Vorrichtung zur Meldung einer Übertemperatur an einen während der Fahrt rotierenden Teil eines Kraftfahrzeuges offenbart. Die Vorrichtung besteht aus einem Fühler, z.B. einem Bimetall, der bei Erreichen einer bestimmten Temperatur ausgelöst wird und in einem Kreis eines kleinen Funksenders eingeschaltet ist. Der Funksender wird infolge der Auslösung des Fühlers in Betrieb gesetzt.
Ferner besteht die Vorrichtung aus einer stationären Baugruppe, die im Fahrzeug eingebaut ist und einen Funkempfänger umfaßt. Der Temperaturfühler ist an der Bremstrommel angebracht. Weitere Temperaturfühler sind am Gummireifen des Fahrzeugs angeordnet. Der Temperaturfühler ist mit einem Sender verbunden, dessen Ausgang über Funkwellen mit einem Empfänger verbunden ist. Ferner ist der Empfänger mit einer Alarmvorrichtung verbunden, die in Betrieb gesetzt wird, wenn mittels des Temperaturfühlers eine Übertemperatur an der Bremstrommel festgestellt wird. Ein Alarm wird nur dann ausgelöst, wenn die Bremseinrichtung eine vorbestimmte obere Betriebstemperatur überschreitet.

Gemäß der technischen Lehre der DE-A-31 48 552 erfolgt eine funktionsmäßige Trennung der Erfassung der Temperatur der Betriebseinrichtung mittels eines Fühlers und eine Übermittlung der (Über-)Temperatur der Bremseinrichtung durch den Funksender.

Ferner ist in DE-A-35 02 052 eine Einrichtung zum Messen und/oder Regeln des Verschleißes eines Bauteils beschrieben.

Bei Schienenfahrzeugen und insbesondere bei Nahverkehrszügen steigt bei häufig hintereinander ausgeführten Bremsungen im Haltestellenbetrieb die Temperatur der Bremsscheiben immer weiter an. Bei teilweisem Ausfall der generatorischen Bremse ist deswegen sehr häufig eine Reduzierung der Fahrgeschwindigkeit vorgeschrieben. Die Temperaturbelastung der Scheiben und das Bremsverhalten hängt stark vom Beladungszustand des Fahrzeugs und dem individuellen Fahrstil des jeweiligen Fahrers ab. Derartige Einflußparameter können bei einer generellen Vorschrift zur Einschränkung der Geschwindigkeit bei teilweisem Ausfall von Bremsen oder verringerter Bremsleistung nicht ausreichend berücksichtigt werden. Ein weiteres Problem beim Einsatz derartiger Überwachungseinrichtungen in Schienenfahrzeugen sind die im Vergleich zu Straßenfahrzeugen ungleich höheren Stoßbelastungen (bis ca. 100 g), welchen die Einrichtungen ausgesetzt sind. Es ist also nötig, verläßliche Daten zur Verfügung zu stellen, die eine Aussage über die Bremsfähigkeit der Scheibenbremsen bzw. des gesamten Schienenfahrzeugs ermöglichen.

Es ist somit Aufgabe der vorliegenden Erfindung, eine Überwachungseinrichtung der vorgenannten Art und ein Überwachungsverfahren der vorgenannten Art derart weiterzubilden, daß eine kostengünstige, effektive und verläßliche Temperaturüberwachung der Bremsscheiben, insbesondere von Schienenfahrzeugen ermöglicht wird. Es ist ferner Aufgabe der vorliegenden Erfindung, eine Überwachungseinrichtung und ein Überwachungsverfahren anzugeben, mittels der und mittels dem ein sicherer Betrieb von Schienenfahrzeugen möglich ist.

Gelöst wird diese Aufgabe durch die Merkmale der Patentansprüche 1 und 15.

Erfindungsgemäß wird eine Überwachungseinrichtung für Bremsscheiben von Fahrzeugen, insbesondere von Schienenfahrzeugen, mit wenigstens einem zur Temperaturüberwachung dienenden Sensor, der in der Bremsscheibe oder in Nähe der Bremsscheibe angeordnet ist und dessen Sensorsignale in bezug zur Temperatur der Bremsscheibe stehen, mit wenigstens einem die Sensorsignale sendenden Sender und mit wenigstens einem die gesendeten Signale empfangenden Empfänger, wobei das Übertragen der Sensorsignale vom Sender zum Empfänger drahtlos ist, dadurch weitergebildet, daß der Empfänger zum Empfang von Sensorsignalen von wenigstens zwei Sensoren oder von wenigstens zwei Sendern ausgebildet ist.

Durch diese erfindungsgemäße Lösung können sehr verläßlich die Temperaturen von Bremsscheiben gemessen und übermittelt werden. Vorzugsweise können auch Daten oder Signale vom Empfänger zum Sender drahtlos übertragen werden. Vorzugsweise ist der Sender auf einer Achse, in der Scheibenbremse und/oder in oder an der Bremsscheibe angeordnet. Durch diese Maßnahme ist es nicht nötig, die die Temperaturwerte enthaltenden elektrischen Signale über eine an einem elektrischen Kontakt schleifenden Vorrichtung an eine Weiterverarbeitungsvorrichtung, wie insbesondere eine Steuer und/oder Regeleinheit, weiterzuleiten. Durch diese Maßnahme wird es also insbesondere vermieden, stark verschleißende Teile zu verwenden. Im Rahmen dieser Erfindung umfaßt der Begriff Bremsscheibe insbesondere auch Reibscheibe, die insbesondere als Teil eines Rades ausgebildet sein kann, oder Scheibenbremse.

Ferner vorzugsweise sind die Sensoren Thermoelemente oder Infrarotmeßsensoren.

Ferner vorzugsweise sind wenigstens zwei Sensoren je Bremsscheibe vorgesehen, wodurch eine verläßlichere Messung der Temperatur der Bremsscheibe ermöglicht wird. Bei Verwendung wenigstens zweier Sensoren ist nämlich die Wahrscheinlichkeit, daß beide Sensoren in einem hotspot oder in einem coldspot der Bremsscheibe angeordnet sind, geringer. Wenn vorzugsweise ein Sender für mehrere Sensoren, die einer Bremsscheibe oder mehreren Bremsscheiben zugeordnet sind, vorgesehen ist, können weitere Kosten aufgrund weniger Materials bzw. Verwendung weniger Sender, vermieden werden.

Wenn vorzugsweise ein einziger Empfänger für eine Achse oder einen gesamten Wagen des Schienenfahrzeugs vorgesehen ist, können die Kosten für derartige Einrichtungen weiter verringert werden.

Vorzugsweise ist wenigstens ein Signalumwandler, der. die Sensorsignale wandelt, in der Nähe eines Senders angeordnet oder mit dem Sender integriert. Aufgrund dieser vorzugsweisen Ausführungsform der Erfindung, ist es möglich, beispielsweise bei Verwendung von Thermoelementen als Sensoren die geringe anfallende Spannung zu erhöhen, um so eine verläßlichere drahtlose Übertragung zum Empfänger zu ermöglichen. Vorzugsweise sind die Sensorsignale oder die durch den wenigstens einen Signalumwandler gewandelten Sensorsignale mittels einer Steuer- und/oder Regeleinheit, die mit dem wenigstens einen Empfänger gekoppelt ist, verarbeitbar. Die so verarbeitbaren Signale können dazu dienen, die maximale mögliche Fahrgeschwindigkeit der Züge, die von der Bremsfähigkeit der Scheibenbremsen abhängt, voll auszunutzen. Es können ferner Zwangshaltezeiten vorgesehen sein, die über die Steuer- und/oder Regeleinheit oder das Steuerungs- und/oder Regelungssystem optimal beeinflußt und individuell angepaßt werden können.

Wenn vorzugsweise die Steuer- und/oder Regeleinheit mit dem wenigstens einen Empfänger eine Einheit bildet, wird insbesondere bei der Montage Arbeitszeit gespart.

Vorzugsweise weist der wenigstens eine Sensor eine aktive Energieversorgung auf. Unter aktiver Energieversorgung wird insbesondere die Versorgung mit einer Energiequelle verstanden, die eine Primärzelle ist, die üblicherweise als Batterie bezeichnet wird oder beispielsweise eine Sekundärzelle, die üblicherweise als Akkumulator bezeichnet wird. Wenn vorzugsweise wenigstens der eine Sensor eine passive Energieversorgung aufweist, ist der Wartungsaufwand der Überwachungseinrichtung geringer. Als passive Energieversorgung wird insbesondere verstanden, daß der Sensor als Energiequelle dient, beispielsweise durch Ausnutzen der von einem Thermoelement kommenden Spannung, wie beispielsweise die Spannung, die über dem Thermoelement bei Raumtemperatur abfällt, wobei dann die restliche Spannung aufgrund erhöhter Temperatur durch vorgenommene Bremsungen als Meßwert verwendet werden kann. Ferner kann eine passive Energieversorgung auch drahtlos über ein Basisgerät bzw. den Empfänger ausgeführt sein, der drahtlos den Sender mit Energie versorgt.

Wenn wenigstens ein Sensor in der Nähe der Bremsscheibe in einer windabweisenden Vorrichtung angeordnet ist, können verläßlichere Temperaturmessungen auch bei Wind insbesondere bei einem Halt des Schienenfahrzeugs durchgeführt werden. Bei einem Halt des Schienenfahrzeugs wird insbesondere die Konvektion der Wärme nach oben ausgenutzt. Wenn ein Wind vorherrscht, kann die gemessene Temperatur nicht der mittleren Temperatur der Bremsscheiben entsprechen. Durch die bevorzugte Ausführungsform der vorliegenden Erfindung, eine windabweisende Vorrichtung, wie insbesondere einen Zylinder vorzusehen, ist eine verläßlichere Temperaturmessung möglich.

Vorzugsweise ist wenigstens ein Sensor in der Bremsscheibe und wenigstens ein Sensor in der Nähe der Bremsscheibe angeordnet. Durch diese bevorzugte Ausführungsform ist eine noch genauere Bestimmung der mittleren Temperatur der Bremsscheibe möglich.

Vorzugsweise ist der Sender in der Bremsscheibe, insbesondere in einem Kühlkanal, angeordnet. Durch diese bevorzugte Ausführungsform sind besonders kurze Kabelwege von den Sensoren zu dem Sender möglich. Vorzugsweise ist der Sensor in dem Sender oder dem Gehäuse des Senders integriert.

Vorzugsweise ist der Sender in der Nähe zur Bremsscheibe, insbesondere auf der zur Bremsscheibe zugeordneten Achse, angeordnet. Ferner ist der Sender und/oder der Empfänger vorzugsweise ein Transponder. Unter Transponder wird im Rahmen dieser Erfindung insbesondere ein Empfangs-Sendegerät verstanden, das nach dem Abfrage-Antwort-System arbeitet. Ein vom Transponder erhaltenes Signal wird geeignet kodiert und wird dann kodiert und selektiv mit möglicherweise gewünschten weiteren Informationen abgesendet, wobei das Signal von einem weiteren Transponder oder einer diesem nachgeschalteten Vorrichtung oder einem Empfänger insbesondere automatisch entschlüsselt und ausgewertet wird.

Erfindungsgemäß weist ein Überwachungsverfahren zur Überwachung der Temperatur von Bremsscheiben von Fahrzeugen, insbesondere von Schienenfahrzeugen die folgenden Verfahrensschritt auf:
- Messen der Temperatur wenigstens einer Bremsscheibe mittels wenigstens eines Sensors an wenigstens einem Ort der wenigstens einen Bremsscheibe oder in der Nähe der wenigstens einen Bremsscheibe,
- Umwandeln von Sensorsignalen, die durch den wenigstens einen Sensor gemessen werden, in weiterverarbeitbare Werte,
- drahtloses Übertragen der Werte oder der Sensorsignale von wenigstens zwei Sensoren oder von wenigstens zwei Sendern zu einem Empfänger und
- Verarbeiten der Werte oder der Sensorsignale in einer Steuer- und/oder Regeleinheit.

Hierbei können insbesondere vorzugsweise auch die Verfahrensschritte des Umwandelns von Sensorsignalen und des Übertragens der Werte oder der Sensorsignale zu einem Empfänger in zeitlicher Reihenfolge vertauscht werden und/oder die Umwandlung durch Multiplikation mit einem Faktor 1 möglich sein. Durch das erfindungsgemäße Überwachungsverfahren ist ein einfaches, effektives und verläßliches Überwachungsverfahren angegeben, mittels dem die Temperaturen von Bremsscheiben und damit die Bestimmung der Bremsfähigkeit der Scheibenbremsen ermöglicht wird.

Vorzugsweise geschieht die Übertragung und/oder die Umwandlung mittels wenigstens eines Transponders.

Ferner vorzugsweise geschieht die Übertragung kodiert oder nacheinander, so daß die jeweiligen Sensorsignale oder weiterverarbeitbaren Werte, wobei die Sensorsignale oder die Werte den jeweiligen Sensoren zugeordnet sind, von dem Empfänger und/oder der Steuer- und/oder Regeleinheit zugeordnet werden. Durch diesen vorzugsweisen Verfahrensschritt ist es möglich, die jeweiligen Sensorsignale von anderen Sensorsignalen unterscheidbar zu gestalten, so daß die Verarbeitung eindeutig wird. Vorzugsweise werden bei Verwendung mehrerer Sender oder Transponder die Sender oder Transponder von dem Empfänger zeitlich getaktet nacheinander abgefragt.

Vorzugsweise ist ein Verfahren zur Bestimmung des Bremsvermögens eines Schienenfahrzeugs, bei dem eines oder mehrere der vorgenannten Verfahren benutzt wird oder werden, dadurch weitergebildet, daß ein Bremsvermögen des Schienenfahrzeugs aus den Sensorsignalen ermittelt wird, wobei ein Mittelwert der Sensorsignale, insbesondere der Temperatur der jeweiligen einzelnen Bremsscheibe, gebildet wird und anhand der ermittelten Mittelwerte sämtlicher Bremsscheiben des Schienenfahrzeugs das Bremsvermögen durch Addition der Bremsvermögen der jeweiligen Scheibenbremsen, die die Bremsscheiben umfassen, des Schienenfahrzeugs ermittelt wird.

Vorzugsweise wird das Bremsvermögen der jeweiligen Scheibenbremsen durch einen vorgebbaren Datensatz und ggf. eine Interpretation der Daten des Datensatzes und der jeweils gemessenen Temperatur der Scheibenbremse bestimmt. Der vorgebbare Datensatz wird durch den jeweiligen Bremsscheibentyp mit den jeweiligen Bremsklötzen vorzugsweise experimentell bestimmt. Hierbei ergibt sich insbesondere vorzugsweise eine Funktion des Bremsvermögens in Abhängigkeit der Temperatur. Diese Funktion, die insbesondere durch Interpolation von gemessenen Werten sich ergeben kann, wird vorzugsweise zur Bestimmung des Bremsvermögens der Scheibenbremsen und damit des Schienenfahrzeugs genutzt.

Vorzugsweise wird die dem ermittelten Bremsvermögen zugeordnete Höchstgeschwindigkeit des Schienenfahrzeugs eingestellt und/oder Haltezeiten des Schienenfahrzeugs vorgegeben.

### Kurze Beschreibung der Zeichnungen:

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1: eine schematische und zum Teil dreidimensionale Darstellung einer erfindungsgemäßen Überwachungseinrichtung für Bremsscheiben,
- Fig. 2: eine Schnittdarstellung eines Teils einer Scheibenbremse,
- Fig. 3: eine Schnittdarstellung eines Teils einer Scheibenbremse, und
- Fig. 4: eine weitere Schnittdarstellung eines Teils einer Scheibenbremse.

In den folgenden Figuren sind jeweils gleiche oder entsprechende Teile mit denselben Bezugszeichen bezeichnet, so daß auf eine erneute Vorstellung verzichtet wird und lediglich die Abweichungen der in diesen Figuren dargestellten Ausführungsbeispiele gegenüber dem ersten Ausführungsbeispiel erläutert werden.

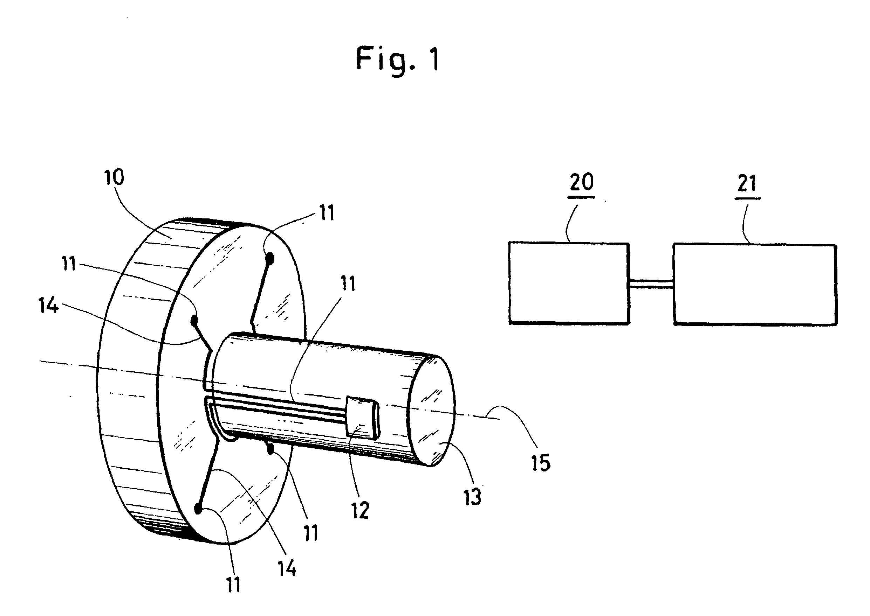

Fig. 1 zeigt schematisch zum Teil eine dreidimensionale Darstellung einer bevorzugten erfindungsgemäßen Ausführungsform. Eine Bremsscheibe 10 ist an einer Achse 13 angeordnet. Die Achse 13 weist eine Drehachse 15 auf. Vier Thermoelemente 11 sind radial verteilt auf der Bremsscheibe angeordnet. Über ein Kabel 14 wird die Thermospannung zu einem Transponder 12 geleitet. Die Kabel 14 sind in der Fig. 1 einpolig dargestellt. Diese sind allerdings bei Verwendung von Thermoelementen als Sensoren tatsächlich zweiadrig. Zur besseren Darstellung wurde allerdings nur eine Ader in die Fig. 1 aufgenommen. Das Kabel 14 eines der dargestellten Thermoelemente 11 ist nicht bis zum Transponder 12 dargestellt, so daß nur drei Kabel der an und für sich vier zweiadrigen Kabel dargestellt sind.

Die in dem Transponder 12 verarbeiteten Thermospannungen, wie beispielsweise in eine höhere Spannung konvertierte Spannungen, werden von dem Transponder zu einem Empfänger 20 gesendet. Der Empfänger 20 ist über Kabel mit einer Steuerund/oder Regeleinheit verbunden. Die Temperatursensoren 11 sitzen in diesem Ausführungsbeispiel direkt in der Bremsscheibe oder auf der Bremsscheibe und stehen in Verbindung mit dem Transponder 12, der auf der Achse angeordnet ist. Das Temperaturüberwachungssystem besteht also in diesem Ausführungsbeispiel aus einem Transponder, der aktiv oder passiv betrieben werden kann, vier Temperatursensoren 11, einer Empfängerstation bzw. einem Basisgerät 20 und einer Steuer- und/oder Regeleinheit. Transponder und Temperatursensor können eine Einheit, insbesondere in Art eines integrierten Aufbaus, bilden, oder wie in Fig. 1 dargestellt, getrennt aufgebaut sein. Die Transponder können aktive Transponder sein, d.h. mit einer eigenen Energiequelle, wie z.B. einem Akkumulator oder einer Batterie oder passive Transponder sein, die mit Energie drahtlos vom Basisgerät oder dem Empfänger 20 versorgt werden. Der oder die Transponder übertragen das Temperatursignal mittels Telemetrie an die Empfangsstation. Mehrere Transponder werden dabei von einer Empfangsstation zeitlich getaktet nacheinander abgefragt. Die aufgenommenen Daten werden mittels des Drahtes an die Steuereinheit weitergeleitet und dort zur Schienenfahrzeugbeeinflussung weiterverarbeitet.

In einer nicht in einer Figur dargestellten bevorzugten Ausführungsform sind ein oder mehrere integrierte Transponder, d.h. Transponder, in denen ein Temperatursensor integriert ist, in der Bremsscheibe, beispielsweise im Kühlkanal, angeordnet. Diese senden die Signale beispielsweise kodiert an den Empfänger oder getaktet nacheinander.

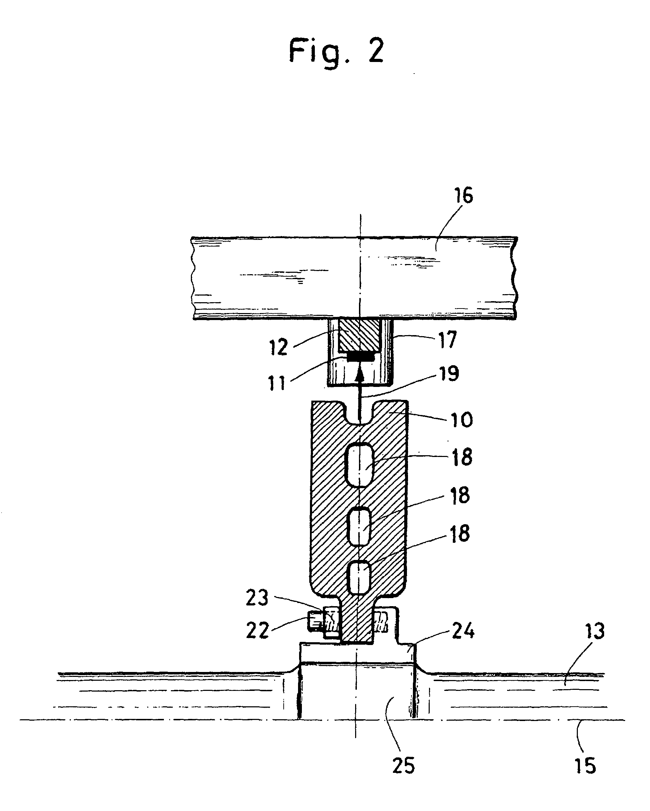

In Fig. 2 ist eine Schnittdarstellung eines Teils einer Scheibenbremse dargestellt. Die Bremsscheibe 10 weist Hohlräume 18 auf, die zur Kühlung der Bremsscheibe 10 dienen. Abwärme 19, die durch einen Pfeil dargestellt ist, strömt aufgrund der Konvektion insbesondere im Stand des Schienenfahrzeugs nach oben und trifft dort auf ein Thermoelement 11, das direkt an einem Transponder 12 angebracht ist. Die Einheit Transponder 12 mit Thermoelement 11 ist in einem Rohr 17 angeordnet, um zu verhindern, daß Winde die gemessene Temperatur beeinflussen. Der Transponder 12 ist selbst wieder an einem Träger 16 befestigt.

Die Bremsscheibe 10 ist über eine Schraube 22 mittels eines Klemmrings 23 an die Nabe 24 auf dem Achssitz 25, angebracht. Es können auch mehrere Thermoelemente 11 und/oder Transponder 12 in der Nähe der Bremsscheibe 10 angeordnet sein und zwar mit einem gewissen Winkel, der von dem Winkel aus der Fig. 2 abweicht, um einen genaueren Mittelwert der Temperatur der Bremsscheibe zu erhalten. Ferner kann als Temperatursensor 11 auch ein Infrarotsensor oder ähnliche bekannte Temperatursensoren Verwendung finden. Die Bremsleistung einer Scheibenbremse hängt stark von der Temperatur der Bremsscheibe ab. Durch die Erfindung ist es möglich, an einer rotierenden Bremsscheibe verläßliche Temperaturen zu messen. Für die Bestimmung der Bremsleistung ist die mittlere Bremsscheibentemperatur wichtig. Hierzu wird ein Mittelwert über eine oder mehrere Meßstellen ermittelt. Die Erfindung eignet sich insbesondere für Schienenfahrzeuge, die beispielsweise 20 oder mehr Bremsscheiben aufweisen, bei der dann beispielsweise 20 oder mehr Sender verwendet werden und ein einziger Empfänger. Hierbei können sehr viele Meter Kabel eingespart werden und die Montage selbst wird deutlich weniger aufwendig.

Wird die Bremsleistung sämtlicher Scheibenbremsen und somit eine angemessenen Höchstgeschwindigkeit bestimmt und entsprechend begrenzt, kann ein vorgeschriebener Bremsweg noch eingehalten werden und ggf. vorzusehende Haltezeiten werden durch Bestimmung des Bremsvermögens des Schienenfahrzeugs aus den Temperaturen der Bremsscheiben ermöglicht. Hierbei wird insbesondere ein Mittelwert der Temperaturen der jeweiligen einzelnen Bremsscheiben gebildet und anhand der ermittelten Mittelwerte sämtlicher Bremsscheiben des Schienenfahrzeugs das Bremsvermögen durch Addition der Bremsvermogen der jeweiligen Scheibenbremsen, die die Bremsscheiben umfassen, ermittelt.

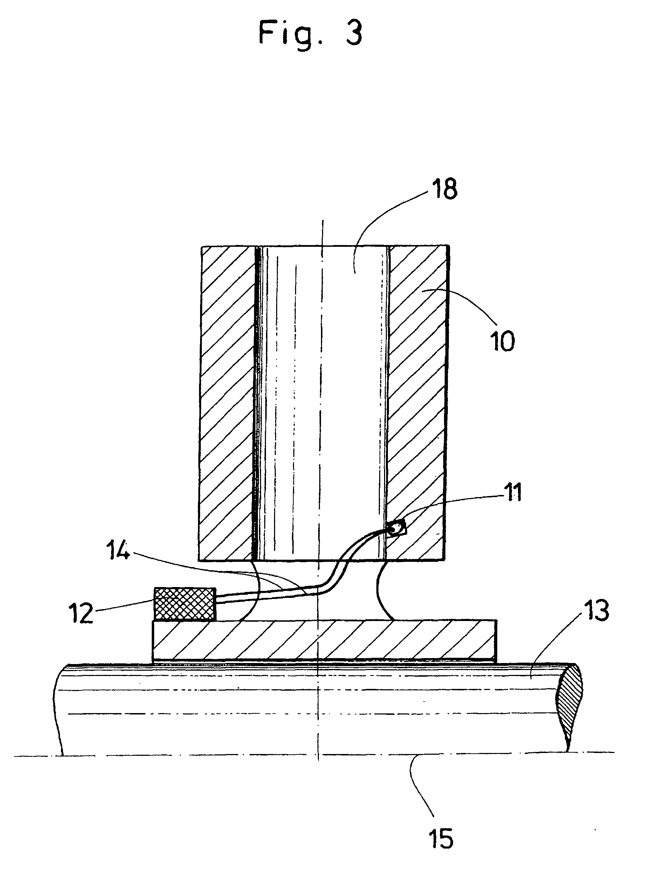

Fig. 3 zeigt einen Schnitt eines Teils einer Scheibenbremse. An der Bremsscheibe 10 ist von innen ein Thermoelement 11 angebracht. Vom Thermoelement 11 führen Kabel 14 zu einem Transponder 12. Der Transponder sitzt auf der Scheibennabe und rotiert mit der Rotation der Bremsscheibe bzw. der Scheibennabe. Alternativ zur Bremsscheibe könnte es sich hierbei auch um eine Reibscheibe 30 handeln, die ein Teil eines Rades eines Schienenfahrzeuges sein kann.

Die Temperatur wird in diesem Ausführungsbeispiel als Massentemperatur der Bremsscheibe 10 bzw. der Reibscheibe 30 gemessen. Die Temperatur an der Reibfläche 35 oder die Bremsscheibenflächentemperatur, also die Temperatur, die an der Kontaktfläche der Bremsscheibe bzw. Reibscheibe zu einem Bremsklotz oder dergleichen existiert, kann nämlich durch hot spot-Bildung gestreut werden. Die Massentemperatur mittelt über die zonal unterschiedlichen Temperaturen.

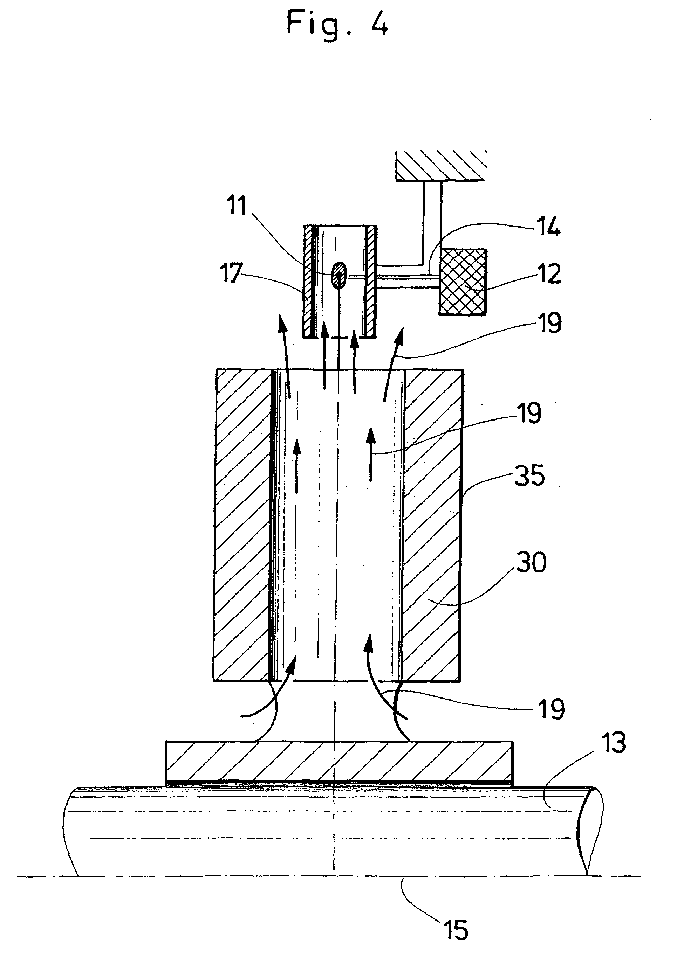

Fig. 4 zeigt eine Schnittdarstellung eines weiteren Ausführungsbeispieles der Erfindung. In Fig. 4 ist eine Reibscheibe 30 dargestellt. Die Reibfläche 35 der Reibscheibe oder Bremsscheibe wird durch Bremswirkung erhitzt. In Fig. 4 wird die Temperatur der Kühlluft gemessen, die durch Pfeile dargestellt sind, die die Abwärme 19 darstellen sollen. Das Thermoelement 11 sitzt in einem Schutzrohr 17, das gegen Seitenwind schützt und erfaßt die Lufttemperatur, die durch freie Konvektion im Stand an einer Haltestelle in einem bestimmten Verhältnis zur Scheibentemperatur steht.

Es ist auch möglich, die Kühllufttemperatur während der Fahrt zu messen. Diese steht bei entsprechenden Bremsscheibenkonstruktionen in einem bestimmten Verhältnis zur Reibringmassentemperatur und ist dann im wesentlichen drehzahlunabhängig.

### Bezugszeichenliste

- 10: Bremsscheibe
- 11: Thermoelement
- 12: Transponder
- 13: Achse
- 14: Kabel
- 15: Drehachse
- 16: Träger
- 17: Rohr
- 18: Hohlraum
- 19: Abwärme
- 20: Empfänger
- 21: Steuer- und/oder Regeleinheit
- 22: Schraube
- 23: Klemmring
- 24: Nabe
- 25: Achssitz
- 30: Reibscheibe
- 35: Reibfläche der Reibscheibe

## Patentansprüche

1. Überwachungseinrichtung für Bremsscheiben (10) von Fahrzeugen, insbesondere von Schienenfahrzeugen, mit wenigstens einem zur Temperaturüberwachung dienenden Sensor (11), der in der Bremsscheibe (10) oder in der Nähe der Bremsscheibe (10) angeordnet ist und dessen Sensorsignale in bezug zur Temperatur zur Bremsscheibe (10) stehen, mit wenigstens einem die Sensorsignale sendenden Sender (12) und mit wenigstens einem die gesendeten Signale empfangenden Empfänger (20), wobei das Übertragen der Sensorsignale vom Sender (12) zum Empfänger (20) drahtlos ist, **dadurch gekennzeichnet, daß** der Empfänger (20) zum Empfang von mehreren Sensorsignalen von wenigstens zwei Sensoren (11) oder von wenigstens zwei Sendern (12) ausgebildet ist.

2. Überwachungseinrichtung nach Anspruch 1, **dadurch gekennzeichnet, daß** wenigstens zwei Sensoren (11) je Bremsscheibe (10) vorgesehen sind.

3. Überwachungseinrichtung nach Anspruch 1 und/oder 2, **dadurch gekennzeichnet, daß** ein Sender (12) für mehrere Sensoren (11), die einer Bremsscheibe (10) oder mehreren Bremsscheiben (10) zugeordnet sind, vorgesehen ist.

4. Überwachungseinrichtung nach einem oder mehreren der Ansprüche 1 bis 3, **dadurch gekennzeichnet, daß** ein einziger Empfänger (20) für eine Achse (13) oder einen gesamten Wagen des Schienenfahrzeugs vorgesehen ist.

5. Überwachungseinrichtung nach einem oder mehreren der Ansprüche 1 bis 4, **dadurch gekennzeichnet, daß** wenigstens ein Signalumwandler (12), der die Sensorsignale wandelt, in der Nähe eines Senders (12) angeordnet ist oder mit dem Sender (12) integriert ist.

6. Überwachungseinrichtung nach einem oder mehreren der Ansprüche 1 bis 5, **dadurch gekennzeichnet, daß** die Sensorsignale oder die durch den wenigstens einen Signalumwandler (12) gewandelten Sensorsignale mittels einer Steuer- und/oder Regeleinheit (21), die mit dem wenigstens einen Empfänger (20) gekoppelt ist, verarbeitbar sind.

7. Überwachungseinrichtung nach Anspruch 6, **dadurch gekennzeichnet, daß** die Steuer- und/oder Regeleinheit (21) mit dem wenigstens einen Empfänger (20) eine Einheit bildet.

8. Überwachungseinrichtung nach einem oder mehreren der Ansprüche 1 bis 7, **dadurch gekennzeichnet, daß** der wenigstens eine Sender (11) eine aktive Energieversorgung aufweist.

9. überwachungseinrichtung nach einem oder mehreren der Ansprüche 1 bis 7, **dadurch gekennzeichnet, daß** der wenigstens eine Sender (11) eine passive Energieversorgung aufweist.

10. Überwachungseinrichtung nach einem oder mehreren der Ansprüche 1 bis 9, **dadurch gekennzeichnet, daß** wenigstens ein Sensor (11) in der Nähe der Bremsscheibe (10) in einer windabweisenden Vorrichtung angeordnet ist.

11. Überwachungseinrichtung nach einem oder mehreren der Ansprüche 1 bis 10, **dadurch gekennzeichnet, daß** wenigstens ein Sensor (11) in der Bremsscheibe (10) und wenigstens ein Sensor (11) in der Nähe der Bremsscheibe (10) angeordnet ist.

12. Überwachungseinrichtung nach einem oder mehreren der Ansprüche 1 bis 11, **dadurch gekennzeichnet, daß** der Sender (12) in der Bremsscheibe (10), insbesondere in einem Kühlkanal (18), angeordnet ist.

13. Überwachungseinrichtung nach einem oder mehreren der Ansprüche 1 bis 11, **dadurch gekennzeichnet, daß** der Sender (12) in der Nähe zur Bremsscheibe (10), insbesondere auf der zur Bremsscheibe zugeordneten Achse (13), angeordnet ist.

14. Überwachungseinrichtung nach einem oder mehreren der Ansprüche 1 bis 13, **dadurch gekennzeichnet, daß** der Sender (12) und/oder der Empfänger (20) ein Transponder ist.

15. Verfahren zur Überwachung der Temperatur von Bremsscheiben (10) von Fahrzeugen, insbesondere von Schienenfahrzeugen, mit den folgenden Verfahrensschritten:
- Messen der Temperatur wenigstens einer Bremsscheibe (10) mittels wenigstens eines Sensors (11) an wenigstens einem Ort der wenigstens einen Bremsscheibe (10) oder in der Nähe der wenigstens einen Bremsscheibe (10),
- Umwandeln von mehreren Sensorsignalen, die durch den wenigstens einen Sensor (11) gemessen werden, in weiterverarbeitbare Werte,
- drahtloses Übertragen der mehreren Werte oder der mehreren Sensorsignale von wenigstens zwei Sensoren (11) oder von wenigstens zwei Sendern (12) zu einem Empfänger (20), und
- Verarbeiten der mehreren werte oder der mehreren Sensorsignale in einer Steuer- und/oder Regeleinheit (21).

16. Verfahren nach Anspruch 15, **dadurch gekennzeichnet, daß** die Übertragung und/oder die Umwandlung mittels wenigstens eines Transponders (12) geschieht.

17. Verfahren nach Anspruch 15 und/oder 16, **dadurch gekennzeichnet, daß** die Übertragung kodiert oder nacheinander geschieht, so daß die jeweiligen Sensorsignale oder weiterverarbeitbaren Werte, wobei die Sensorsignale oder die Werte den jeweiligen Sensoren zugeordnet sind, von dem Empfänger (20) und/oder der Steuer- und/oder Regeleinheit (21) zugeordnet werden.

18. Verfahren zur Bestimmung des Bremsvermögens eines Schienenfahrzeugs, bei dem eines oder mehrere der Verfahren der Ansprüche 15 bis 17 benutzt wird oder werden, **dadurch gekennzeichnet, daß** ein Bremsvermögen des Schienenfahrzeugs aus den Sensorsignalen ermittelt wird, wobei ein Mittelwert der Sensorsignale, insbesondere der Temperatur, der jeweiligen einzelnen Bremsscheibe (10) gebildet wird und anhand der ermittelten Mittelwerte sämtlicher Bremsscheiben (10) des Schienenfahrzeugs das Bremsvermögen durch Addition der Bremsvermögen der jeweiligen Scheibenbremsen, die die Bremsscheiben (10) umfassen, des Schienenfahrzeugs ermittelt wird.

19. Verfahren nach Anspruch 18, **dadurch gekennzeichnet, daß** das Bremsvermögen der jeweiligen Schreibenbremsen durch einen vorgebbaren Datensatz und ggf. eine Interpolation der Daten des Datensatzes und der jeweils gemessenen Temperatur der Scheibenbremse bestimmt wird.

20. Verfahren nach Anspruch 18 und/oder 19, **dadurch gekennzeichnet, daß** die dem ermittelten Bremsvermögen zugeordnete Höchstgeschwindigkeit des Schienenfahrzeugs eingestellt wird.

## Claims

1. Monitoring system for brake discs (10) of vehicles, in particular rail vehicles, with at least one sensor (11) for temperature-monitoring purposes disposed in the brake disc (10) or in the vicinity of the brake disc (10), the sensor signals of which are correlated to the temperature of the brake disc (10), with at least one transmitter (12) for transmitting the sensor signals and at least one receiver (20) which receives the transmitted signals, the sensor signals being transmitted wirelessly from the transmitter (12) to the receiver (20), **characterised in that** the receiver (20) is designed to receive several sensor signals from at least two sensors (11) or from at least two transmitters (12).

2. Monitoring system as claimed in claim 1, **characterised in that** at least two sensors (11) are provided for each brake disc (10).

3. Monitoring system as claimed in claim 1 and/or 2, **characterised in that** one transmitter (12) is provided for several sensors (11) assigned to one brake disc (10) or several brake discs (10).

4. Monitoring system as claimed in one or more of claims 1 to 3, **characterised in that** a single receiver (20) is provided for one axle (13) or an entire carriage of the rail vehicle.

5. Monitoring system as claimed in one or more of claims 1 to 4, **characterised in that** at least one signal converter (12), which converts the sensor signals, is provided in the vicinity of a transmitter (12) or is integrated with the transmitter (12).

6. Monitoring system as claimed in one or more of claims 1 to 5, **characterised in that** the sensor signals or the sensor signals converted by the at least one signal converter (12) are processable by means of a control and/or regulating unit (21), which is coupled with the at least one receiver (20).

7. Monitoring system as claimed in claim 6, **characterised in that** the control and/or regulating unit (21) constitutes a unit with the at least one receiver (20).

8. Monitoring system as claimed in one or more of claims 1 to 7, **characterised in that** the at least one transmitter (11) has an active power supply.

9. Monitoring system as claimed in one or more of claims 1 to 7, **characterised in that** the at least one transmitter (11) has a passive power supply.

10. Monitoring system as claimed in one or more of claims 1 to 9, **characterised in that** at least one sensor (11) is disposed in the vicinity of the brake disc (10) in a wind-deflecting device.

11. Monitoring system as claimed in one or more of claims 1 to 10, **characterised in that** at least one sensor (11) is disposed in the brake disc (10) and at least one sensor (11) is disposed in the vicinity of the brake disc (10).

12. Monitoring system as claimed in one or more of claims 1 to 11, **characterised in that** the transmitter (12) is disposed in the brake disc (10), in particular in a cooling duct (18).

13. Monitoring system as claimed in one or more of claims 1 to 11, **characterised in that** the transmitter (12) is disposed in the vicinity of the brake disc (10), in particular on the axle (13) assigned to the brake disc.

14. Monitoring system as claimed in one or more of claims 1 to 13, **characterised in that** the transmitter (12) and/or the receiver (20) is a transponder.

15. Method of monitoring the temperature of brake discs (10) of vehicles, in particular rail vehicles, incorporating the following method steps:
- the temperature of at least one brake disc (10) is measured by means of at least one sensor (11) on at least one point of the at least one brake disc (10) or in the vicinity of the at least one brake disc (10),
- several sensor signals measured by the at least one sensor (11) are converted into values which can be further processed,
- the several values or several sensor signals are wirelessly transmitted from at least two sensors (11) or from at least two transmitters (12) to a receiver (20) and
- the several values or several sensor signals are processed in a control and/or regulating unit (21).

16. Method as claimed in claim 15, **characterised in that** the transmission and/or conversion is operated by means of at least one transponder (12).

17. Method as claimed in claim 15 and/or 16, **characterised in that**, since the respective sensor signals or further processable values are specifically assigned to the respective sensors, the transmission is coded or takes place in succession so that these sensor signals or values can be specifically recognised by the receiver (20) and/or the control and/or regulating unit (21).

18. Method of determining the stopping power of a rail vehicle, in which one or more of the methods as claimed in claims 15 to 17 is or are used, whereby a stopping power of the rail vehicle is determined from the sensor signals, a mean value of the sensor signals of each individual brake disc (10) being determined, in particular the temperature, and the resultant mean values of all the brake discs (10) of the rail vehicle are used to determine the stopping power by adding the stopping power of each of the disc brakes of the rail vehicle incorporating the brake discs (10).

19. Method as claimed in claim 18, **characterised in that** the stopping power of the respective disc brakes is determined on the basis of a pre-settable data set and optionally an interpolation of the data of the data set and the temperature measured for each disc brake.

20. Method as claimed in claim 18 and/or 19, **characterised in that** the maximum speed of the rail vehicle associated with the detected stopping power is applied.

## Revendications

1. Dispositif de contrôle de disques (10) de frein de véhicules, notamment de véhicules ferroviaires, comprenant au moins un capteur (11) qui sert à contrôler la température, qui est monté dans le disque (10) de frein ou à proximité du disque (10) de frein et dont les signaux sont en liaison avec la température du disque (10) de frein, au moins un émetteur (12) émettant les signaux du capteur et au moins un récepteur (20) recevant les signaux émis, la transmission de l'émetteur (12) au récepteur (20) étant sans fil, **caractérisé en ce que** le récepteur (20) est constitué pour la réception de plusieurs signaux de capteur d'au moins deux capteurs (11) ou d'au moins deux émetteurs (12).

2. Dispositif de contrôle suivant la revendication 1, **caractérisé en ce qu'**il est prévu au moins deux capteurs (11) par disque (10) de frein.

3. Dispositif de contrôle suivant les revendications 1 et/ou 2, **caractérisé en ce qu'**il est prévu un émetteur (12) sur plusieurs capteurs (11) qui sont associés à un disque (10) de frein ou à plusieurs disques (10) de frein.

4. Dispositif de contrôle suivant une ou plusieurs des revendications 1 à 3, **caractérisé en ce qu'**il est prévu un seul récepteur (20) pour un essieu (13) ou pour tout un wagon du véhicule ferroviaire.

5. Dispositif de contrôle suivant une ou plusieurs des revendications 1 à 4, **caractérisé en ce qu'**au moins un transducteur (12) de signaux, qui transforme les signaux du capteur, est placé à proximité d'un émetteur (12) ou est intégré à l'émetteur (12).

6. Dispositif de contrôle suivant l'une ou plusieurs des revendications 1 à 5, **caractérisé en ce que** les signaux du capteur ou les signaux du capteur transformés par le au moins un transducteur (12) de signal, peuvent être traités au moyen d'une unité (21 ) de commande et/ou de régulation qui est couplée à le au moins un récepteur (20).

7. Dispositif de contrôle suivant la revendication 6, **caractérisé en ce que** l'unité (21) de commande et/ou de régulation forme une unité avec le au moins un récepteur (20).

8. Dispositif de contrôle suivant l'une ou plusieurs des revendications 1 à 7, **caractérisé en ce que** au moins un émetteur (11) a une alimentation active en énergie.

9. Dispositif de contrôle suivant l'une ou plusieurs des revendications 1 à 7, **caractérisé en ce qu'**au moins un émetteur(11) a une alimentation passive en énergie.

10. Dispositif de contrôle suivant l'une ou plusieurs des revendications 1 à 9, **caractérisé en ce qu'**au moins un capteur (11) est placé à proximité du disque (10) de frein dans un dispositif protégeant du vent.

11. Dispositif de contrôle suivant l'une ou plusieurs des revendications 1 à 10, **caractérisé en ce qu'**au moins un capteur (11) est placé dans le disque (10) de frein et au moins un capteur (11) est placé à proximité du disque (10) de frein.

12. Dispositif de contrôle suivant l'une ou plusieurs des revendications 1 à 11, **caractérisé en ce que** l'émetteur (12) est placé dans le disque (10) de frein, notamment dans un canal (18) de refroidissement.

13. Dispositif de contrôle suivant l'une ou plusieurs des revendications 1 à 11, **caractérisé en ce que** l'émetteur (12) est placé à proximité du disque (10) de frein, notamment sur l'essieu (13) associé au disque de frein.

14. Dispositif de contrôle suivant l'une ou plusieurs des revendications 1 à 13, **caractérisé en ce que** l'émetteur (12) et/ou le récepteur (20) sont des transpondeurs.

15. Procédé de contrôle de la température de disque (10) de frein de véhicule, notamment de véhicule ferroviaire, comprenant les stades de procédé suivants:
- on mesure la température d'au moins un disque (10) de frein au moyen d'au moins un capteur (11) en au moins un emplacement du au moins un disque (10) de frein ou à proximité du au moins un disque (10) de frein,
- on transforme plusieurs signaux de capteur qui sont mesurés par le au moins un capteur (11) en des valeurs que l'on peut traiter,
- on transmet sans fil les plusieurs valeurs ou les plusieurs signaux de capteur d'au moins deux capteurs (11) ou d'au moins deux émetteurs (12) à un récepteur (20), et
- on traite les plusieurs valeurs ou les plusieurs signaux de capteur dans une unité (21) de commande et/ou de régulation.

16. Procédé suivant la revendication 15, **caractérisé en ce que** l'on effectue la transmission et/ou la transformation au moyen d'un transpondeur (12).

17. Procédé suivant les revendications 15 et/ou 16, **caractérisé en ce que** l'on effectue la transmission de manière codée ou successivement de façon à ce que les signaux respectifs de détecteur ou les valeurs qui peuvent être traitées, les signaux de capteur ou les valeurs étant associés aux capteurs respectifs, soient associés par le récepteur (20) et/ou par l'unité (21) de commande et/ou de régulation.

18. Procédé de détermination du pouvoir de freinage d'un véhicule ferroviaire dans lequel on utilise un ou plusieurs des procédés des revendications 15 à 17, **caractérisé en ce que** l'on détermine une puissance de freinage du véhicule ferroviaire à partir des signaux de capteur en formant une moyenne des signaux de capteur, notamment de la température des disques (10) de frein respectifs et en déterminant, au moyen des moyennes déterminées de tous les disques (10) de frein du véhicule ferroviaire, le pouvoir de freinage par addition des pouvoirs de freinage des freins à disque respectifs du véhicule ferroviaire que les disques (10) de frein comprennent.

19. Procédé suivant la revendication 18, **caractérisé en ce que** l'on détermine la puissance de freinage des freins à disque respectifs par un jeu de données pouvant être prescrit et, le cas échéant, par une interpolation des données du jeu de données et de la température respectivement mesurée du frein à disque.

20. Procédé suivant les revendications 18 et/ou 19, **caractérisé en ce que** l'on règle la vitesse la plus grande du véhicule ferroviaire qui est associée au pouvoir de freinage qui a été déterminé.
